# EUROPÄISCHE PATENTSCHRIFT

(11) **EP 1 446 849 B1**
(45) Veröffentlichungstag und Bekanntmachung des Hinweises auf die Patenterteilung: **02.11.2016**
(21) Anmeldenummer: 02764885.6
(22) Anmeldetag: 19.09.2002
(51) Int. Cl.: H01M 4/88, H01M 4/86, C25B 11/03

(54) **VERFAHREN ZUR HERSTELLUNG VON GASDIFFUSIONSELEKTRODEN**
METHOD FOR PRODUCING GAS DIFFUSION ELECTRODES
PROCEDE POUR PRODUIRE DES ELECTRODES A DIFFUSION GAZEUSE

(30) Priorität: 02.10.2001 DE 10148599
(43) Veröffentlichungstag der Anmeldung: 18.08.2004
(73) Patentinhaber: Covestro Deutschland AG, 51373 Leverkusen (DE)
(72) Erfinder: BULAN, Andreas, 40764 Langenfeld (DE); GESTERMANN, Fritz, 51377 Leverkusen (DE); PINTER, Hans-Dieter, 42929 Wermelskirchen (DE); WEUTA, Peter, 51375 Leverkusen (DE); KLESPER, Walter, 51467 Bergisch Gladbach (DE)
(74) Vertreter: Levpat
(86) Internationale Anmeldenummer: PCT/EP2002/010493
(87) Internationale Veröffentlichungsnummer: WO 2003/032417

(56) Entgegenhaltungen:
- EP-A- 0 940 870
- WO-A-01/71830
- WO-A-03/044245
- DE-A- 3 710 168
- DE-A- 3 722 019
- US-A- 4 529 672

## Beschreibung

Die Erfindung betrifft ein Verfahren zur Herstellung von Gasdiffusionselektroden, welche wenigstens aus einem elektrisch leitfähigen Katalysatorträger und einem durch Walzen aus einer Pulvermischung hergestellten Flächengebilde bestehen. Die Pulvermischungen enthalten wenigstens einen Katalysator oder eine Katalysatormischung und einen Binder.

In der DE-A 37 10 168 und der EP-A 297 377 wird die Herstellung von Gasdiffusionselektroden durch Verwalzen von trockenen Pulvermischungen, enthaltend eine Verbindung des Katalysatormaterials, beispielsweise Silber(I)oxid, und Polytetrafluorethylen (PTFE) als Binder, beschrieben. Nach der Verwalzung der Pulvermischung zu einem Flächengebilde wird diese auf einen mechanischen Träger aufgebracht bzw. eingewalzt, der als Stromzuführung bzw. -abführung der Elektrode fungiert. Der mechanische Träger kann z.B. ein Metallnetz, -vlies, -gewebe oder ein Kohlenstoffnetz, -vlies oder -gewebe sein. Die Aufbringung des Flächengebildes auf den mechanischen Träger kann z.B. durch Pressen oder Walzen erfolgen.

Die Eigenschaften der Flächengebilde, welche durch das Verwalzen von Pulvermischungen hergestellt werden, sind von einer Vielzahl von Parametern abhängig. Neben der Pulverbeschaffenheit selbst gehören zu diesen Parametern u.a. die Geometrie sowie die Oberflächenbeschaffenheit der Walzen, die Drehzahl der Walzen, die Präzision der verwendeten Lager, die Rundlaufgenauigkeit der Lager einerseits und der Walzen andererseits, der Walzenspalt sowie die Zuhaltekraft der Walzen. Variiert beispielsweise der Walzenspalt während des Walzprozesses stark, so werden insbesondere Flächengebilde erhalten, deren Dicke und Dichte nicht ausreichend homogen sind. Wird dagegen der Walzenspalt im Wesentlichen konstant gehalten, insbesondere durch eine zu hohe Zuhaltekraft, zeigen die Elektroden im Betrieb unter anderem stark überproportionale Spannungsanstiege bei steigender Stromdichte und eine schlechte elektrochemische Aktivität. Auch zu dicke und mechanisch instabile Flächengebilde sind für die Weiterverarbeitung nicht zu gebrauchen. Für die technische Handhabbarkeit, beispielsweise für den Einsatz als Gasdiffusionselektrode zur elektrochemischen Herstellung von Chlor aus wässrigen Lösungen von Alkalichlorid, müssen derartige Flächengebilde eine Länge von 2 bis 3 Metern und eine Breite von 30 bis 40 cm aufweisen.

Handelsübliche Walzen mit einer Breite von ca. 40 cm besitzen aus Gründen der Stabilität in Abhängigkeit von den maximal anzuwendenden Zuhaltekräften Durchmesser von ca. 15 cm und mehr. Es wurde festgestellt, dass Flächengebilde, die mit derartigen Walzen hergestellt und als Gasdiffusionselektroden eingesetzt wurden, keine ausreichende elektrochemische Aktivität aufweisen. Hierdurch werden insbesondere die Betriebskosten von Elektrolysezellen u.dgl. stark erhöht. Die elektrochemische Aktivität ist beispielsweise nicht ausreichend, wenn die Elektrode bei einer Stromdichte von 4 kA/m² eine Zellspannung von über 2,5 V hat.

Aufgabe der Erfindung ist es, ein Verfahren zur Herstellung von Gasdiffusionselektroden zu schaffen, mit dem elektrochemisch aktive Flächengebilde mit einer hohen Homogenität der Dichte sowie geringen Dickeschwankungen hergestellt werden können. Die Gasdiffusionselektrode muss ferner eine gute elektrochemische Aktivität und mechanische Stabilität aufweisen. Die Parameter des Walzprozesses müssen so gewählt werden, dass beim Verwalzen der Pulvermischung zu einem Flächengebilde eine optimale elektrochemische Aktivität erzielt wird und diese beim Aufbringen des Flächengebildes auf den Katalysatorträger durch Walzen nicht beeinträchtigt wird.

Die Lösung der Aufgabe erfolgt erfindungsgemäß durch die Merkmale des Anspruchs 1.

Erfindungsgemäß wird das Flächengebilde durch Walzen eines Pulvergemisches, welches wenigstens einen Katalysator oder eine Katalysatormischung und einen Binder enthält, hergestellt. Erfindungsgemäß wird während des Walzprozesses der Pulvermischung die Zuhaltekraft der Walzen im Bereich von 0,2 kN/cm bis 15 kN/cm konstant gehalten. Besonders bevorzugt ist es, eine Zuhaltekraft im Bereich von 0,2 kN/cm bis 10 kN/cm, vorzugsweise 0,2 kN/cm bis 5 kN/cm und besonders bevorzugt 0,2 kN/cm bis 2 kN/cm vorzusehen. Besonders gute Ergebnisse konnten erzielt werden, wenn die Zuhaltekraft im Bereich von 0,3 kN/cm bis 0,6 kN/cm gehalten wird.

Die Zuhaltekraft kann hydraulisch und/oder mechanisch und/oder pneumatisch erzeugt werden. Dies hat den Vorteil, dass die Zuhaltekraft sehr genau einstellbar ist.

Bei einer bevorzugten Ausführungsform des erfindungsgemäßen Verfahrens werden Walzen eingesetzt, deren Durchmesser minimal 8 cm und maximal 15 cm, vorzugsweise maximal 13 cm und besonders bevorzugt maximal 11 cm ist.

Erfindungsgemäß wird das durch Walzen hergestellte Flächengebilde ebenfalls durch Walzen mit einem elektrisch leitenden Träger verbunden. Das Walzen erfolgt dabei unter einer Linienkraft von 0,1 kN/cm bis 2 kN/cm.

Besonders bevorzugt ist eine Kombination der bevorzugten Ausführungsformen des erfindungsgemäßen Verfahrens.

Ein wesentliches Element der Erfindung ist, dass bei einem geringeren Durchmesser der Walzen eine geringere Zuhaltekraft beim Walzen angewandt werden muss. Somit ergibt sich für jeden Walzendurchmesser bzgl. der Zuhaltekraft und der sich einstellenden Dicke und Dichte des Flächengebildes nur ein bestimmter Arbeitsbereich. Beispielsweise ist es nicht möglich, mit einem Walzendurchmesser von 13 cm und einer Zuhaltekraft von 1,5 kN/cm ein Flächengebilde der Dicke 0,35 mm und Dichte 4,4 g/ml herzustellen. Dies gelingt nur bei geringerem Walzendurchmesser.

Es wurde überraschenderweise festgestellt, dass unter den erfindungsgemäßen Bedingungen für das Verwalzen der Pulvermischung Flächengebilde erhalten werden, aus denen Elektroden mit ausreichender mechanischer Stabilität und elektrochemischer Aktivität hergestellt werden können.

Das mit Hilfe des erfindungsgemäßen Verfahrens hergestellte Flächengebilde für Gasdiffusionselektroden weist eine hohe Homogenität auf. Es ist möglich, Dichteschwankungen zu erreichen, die im Bereich von ± 0,2 bis ± 0,5 g/m³ liegen. Ferner ist es mit Hilfe des erfindungsgemäßen Verfahrens möglich, Flächengebilde herzustellen, deren Dickenschwankungen von ± 0,05 mm bis ± 0,2 mm reichen.

Unter der elektrochemischen Aktivität der Elektrode ist neben der Spannung bei einer bestimmten Stromdichte die Veränderung der Spannung bei höheren Stromdichten sowie die Gas- und Flüssigkeitsdurchlässigkeit im Betrieb zu verstehen. Mit einer guten Elektrode kann die Elektrolyse bei hohen Stromdichten und niedriger Spannung betrieben werden, der Anstieg der Spannung bei Erhöhung der Stromdichte ist nur gering. So kann z.B. die Elektrolyse einer Natriumchloridlösung, bei der an der Anode Chlor entwickelt wird und an der Kathode Sauerstoff verzehrt und Natronlauge gebildet wird, bei einer Stromdichte von 4 kA/m² mit einer Spannung von unter 2,5 V betrieben werden. Im Idealfall lässt die Elektrode kein Gas von der Gasseite in den Flüssigkeitsraum durch und umgekehrt keine Flüssigkeit in den Gasraum.

Die vorzugsweise trockene Pulvermischung für das Flächengebildematerial kann aus einem Binder, z.B. einem Polymer wie Polytetrafluorethylen (PTFE), einem Katalysator oder einer Katalysatormischung bestehen. Ebenfalls ist es möglich, dass eine der Komponenten der Pulvermischung Kohlenstoff oder eine kohlenstoffhaltige Verbindung ist. Ebenso kann die Pulvermischung Zuschlagstoffe, wie z.B. Ammoniumhydrogencarbonat, die u.a. als Porenbildner fungieren, enthalten. Der Katalysator oder die Katalysatormischung kann. z.B. aus nichtmetallischen Verbindungen eines den Katalysator bildenden Metalls oder aus Mischungen von Metall und der nichtmetallischen Verbindungen eines den Katalysator bildenden Metalls bestehen. Ebenso können Gemische aus verschiedene Metallen oder Metallverbindungen, bevorzugt Edelmetalle, eingesetzt werden. Vorzugsweise werden als Katalysator Silber(I)oxid oder Mischungen aus Silber(I)oxid und Silbermetall verwendet. Als Binder wird vorzugsweise ein Teflonpulver der Fa. DYNEON Typ 2053, eingesetzt. Die Mischung aus Binder und Katalysator bzw. Katalysatormischung kann z.B., wie in der DE-A 2 941 774 beschrieben, mit einer schnell laufende Mühle mit Schlagmessern aufgemahlen werden. Der Feuchtigkeitsgehalt der Pulvermischung beträgt maximal 0,5 Gew.% H₂O. bevorzugt maximal 0,3 Gew.% H₂O.

Das Verwalzen der Pulvermischung kann mit handelsüblichen Walzenkörpern erfolgen, wie sie bei der Herstellung derartiger Flächengebilde oder bei der Kompaktierung von Pulvern eingesetzt werden. Dabei können die einzelnen Walzen unterschiedliche Durchmesser aufweisen. Ebenso ist es möglich, dass die Walzen mit unterschiedlichen Geschwindigkeiten laufen. Die Walzenoberflächen sollten dabei eine Rauhigkeit aufweisen, bei der die Pulvermischung noch mit gleichmäßiger Geschwindigkeit eingezogen werden kann. Ziel ist es, ein homogenes Flächengebilde herzustellen. Je nach der Eigenschaft der Pulvermischung kann die Oberflächenrauhigkeit der Walze angepasst werden. Vorzugsweise wird mit glatten Walzenoberflächen gearbeitet, also Oberflächen die keine grobe Struktur aufweisen. Die Oberflächenrauhigkeit der Walze, gemessen als Ra-Zahl, liegt dabei vorzugsweise zwischen 0,05 µm und 1,5 µm.

Weitere Parameter, die das Einzugverhalten der Pulvermischung beeinflussen können, sind neben den Eigenschaften der Pulvermischung selbst z.B. die Drehzahl der Walze oder der eingestellte Walzenspalt oder die Kombination mehrerer Parameter.

Das Verwalzen von trockenen Pulvermischungen erfolgt derart, dass der Abstand der beiden Walzen zueinander vor dem Walzprozess auf einen bestimmten Wert, z.B. 0,2 mm, eingestellt wird. Der eingestellte Walzenspalt ist dabei von der Pulverbeschaffenheit, der Oberflächenrauhigkeit der Walzen, der Drehzahl der Walze sowie des Durchmessers der Walze so zu wählen, dass das hergestellte Flächengebilde eine Dicke von 0,05 bis 0,7 mm aufweist. Vorzugsweise beträgt die Dicke des Flächengebildes 0,15 bis 0,6 mm. In Abhängigkeit des Pulvers sowie der Pulverbeschaffenheit beträgt der Walzenspalt zur Erzielung der vorstehenden Dicken des Flächengebildes vorzugsweise 0 bis 0,30 mm, insbesondere 0,005 bis 0,2 mm. Anschließend wird die trockene Pulvermischung auf den Walzenspalt dosiert, die Walze zieht das Pulver ein und verdichtet es zu einem Flächengebilde. Da erfindungsgemäß die Zuhaltekraft während des Walzprozesses konstant gehalten wird, weitet sich der voreingestellte Walzenspalt beim Einzug des Pulvermaterials geringfügig auf und variiert während des Walzprozesses geringfügig, je nach Menge und Beschaffenheit des eingezogenen Pulvermaterials. Der Walzenspalt variiert dabei in einem Bereich von ±0,05 bis ±0,2 mm.

Für die Durchführung des erfindungsgemäßen Verfahrens ist es vorteilhaft, dass das Lagerspiel der die Walzen aufnehmenden Lager gering ist, d.h. dass die verwendeten Lager ein Lagerspiel von vorzugsweise weniger als 0,06 mm und eine Rundlaufgenauigkeit von weniger als 50 µm aufweisen sowie dass die Walzen vorzugsweise aus einer Fertigung stammen, bei deren Herstellung auf äußerste Präzision geachtet wurde. Dies betrifft nicht nur das Lagerspiel der verwendeten Lager und Lagersteine sondern vorzugsweise auch Teile, in denen die Lager im Walzengestell montiert werden, sofern sie einen Einfluss auf den Walzenspalt haben.

Weil das Flächengebilde nach dem erfindungsgemäßen Verfahren mit einem elektrisch leitenden Träger verbunden wird, ist das Flächengebilde einerseits so fest mit dem Träger verbunden, dass es niederohmig mit dem Träger kontaktiert und sich nicht mehr von diesem löst, und andererseits das Porensystem des Flächengebildes nicht zerstört wird, so dass eine ausreichende elektrochemische Aktivität gewährleistet ist. Bei dem elektrisch leitfähigen Träger handelt es sich beispielsweise um ein Metallnetz, ein Metallvlies, ein Metallgewebe oder ein Metallschaum. Auch Streckmetalle können verwendet werden. Der Träger besteht vorzugsweise aus Nickel oder vernickelten Metallverbindungen oder Nichtmetallverbindungen, beispielsweise Kohlenstoff. Der Träger übernimmt die Funktion eines Stromverteilers.

Das Aufbringen des elektrochemisch aktiven Flächengebildes auf den elektrisch leitfähigen Träger könnte z.B. auch durch Verpressen erfolgen. Das Walzen hat jedoch den Vorteil, dass die Gasdiffusionselektrode in einem kontinuierlichen Prozess hergestellt werden kann und die Kräfte gleichmäßiger verteilt werden. Die Kraft, die beim Walzen aufgewendet wird, hängt von dem Träger ab. Je größer die Maschenweite eines Metallnetzes und je geringer die Dicke des Metalldrahtes ist, desto geringer ist die Kraft, die benötigt wird. Ähnliches gilt für Streckmetalle, bei denen mit zunehmender Maschenweite und Maschenbreite, aber abnehmender Stegdicke, die benötigte Kraft sinkt.

Um insbesondere die mechanische Stabilität der Gasdiffusionselektrode sicherzustellen, ist der elektrisch leitfähige Träger in einer bevorzugten Ausführungsform mit einer gasdurchlässigen, metallischen Grundplatte mechanisch und elektrisch leitend verbunden. Die Grundplatte besteht insbesondere aus Nickel- oder einer Nickellegierung, z.B. einer Nickel-Silber-Legierung. Sie weist zur Durchleitung des Reaktionsgases eine Vielzahl von Öffnungen, beispielsweise Schlitze oder Bohrungen, auf. Je stabiler der Träger bzw. der mit einer Grundplatte versehene Träger ist, desto stärker verformt er sich während des Walzprozesses. Die Verformung kann vermieden bzw. verringert werden, wenn für die beiden Walzen vorzugsweise unterschiedliche Umfangsgeschwindigkeiten gewählt werden.

Die Temperatur des Flächengebildes und/oder des elektrisch leitfähigen Katalysatorträgers während des Walzprozesses beträgt bevorzugt 5 bis 70°C. Um diesen Temperaturbereich einzuhalten, werden bevorzugt Walzenkörper eingesetzt, die temperierbar sind. Dabei sind die Walzenkörper zur Durchleitung eines Kühl- oder Heizmediums hohl ausgeführt. Es ist besonders bevorzugt, dass die Walzen während des Walzprozesses gekühlt werden, da die Pulverkompaktierung das Pulver durch Reibkräfte erwärmt. Ggf. können die Walzen zur Erreichung der Betriebstemperatur zu Beginn des Walzprozesses auch erwärmt werden oder auf eine erhöhte Temperatur thermostatisiert werden. Sind die Walzenkörper aus massivem Material gefertigt und können nicht temperiert werden, so muss die zu verwalzende Pulvermischung vor dem Walzprozess auf die gewünschte Temperatur gebracht werden.

Die Drehzahl der Walze ist in gewissen Bereichen frei wählbar, soweit das Pulver von den Walzen homogen eingezogen wird. Besonders bevorzugt sind jedoch Umfangsgeschwindigkeiten der Walzen, die im Bereich von 0,05 bis 19 m/min, insbesondere von 0,1 bis 15 m/min, liegen.

Die nach dem erfindungsgemäßen Verfahren hergestellten Gasdiffusionselektroden können in einem Elektrolyseprozess, insbesondere bei der Elektrolyse einer wässrigen Lösung von Natriumchlorid, eingesetzt werden.

Die entsprechend der folgenden Beispiele hergestellten Flächengebilde für Gasdiffusionselektrode wurden bei der Chloralkalielektrolyse eingesetzt. Hierzu wurde eine Zelle eingesetzt, die aus einem Anodenraum und durch eine Ionenaustauschermembran getrennt, einem Kathodenraum bestand. Im Anodenraum wurde eine Natriumchloridlösung der Konzentration von 200 g/l eingesetzt, die an einer Rutheniumoxid beschichteten Titanelektrode zu Chlor umgesetzt wurde. Der Kathodenraum wurde vom Anodenraum durch eine Kationenaustauschermembran der Fa. DuPont, Typ Nafion^{®} 982, getrennt. Zwischen Gasdiffusionselektrode und Kationenaustauschermembran bestand einen Elektrolytspalt, in dem eine ca. 32 %ige Natronlauge umgepumpt wurde. Hinter der Gasdiffusionselektrode wurde reiner Sauerstoff mit einem Gehalt von 99,9 % in das Kathodenhalbelement geleitet. Anoden-, Membran- und Gasdiffusionselektrodenfläche betrugen je 100 cm².

### Beispiel 1 (Vergleichsbeispiel)

Eine Mischung aus Silber(I)oxid und PTFE im Gew.-Verhältnis 9:1 wurde mittels einer schnell laufenden Schlagmühle, Fa. IKA, Typ M20, in Intervallen von jeweils 15 Sekunden unter Kühlung aufgemahlen. Diese Mischung wurde auf einer Walze der Fa. Wetzel, mit 2 Walzenkörpern der Breite 40 cm und des Durchmessers 13 cm bei einem Walzenspaltabstand von 0,18 mm auf einer Breite von 20 cm mit einer Zuhaltekraft von 0,075 kN/cm verwalzt. Die Umfangsgeschwindigkeit betrug 1,35 m/min, die Rauhigkeit der Walzenoberflächen wies eine Ra-Zahl von 25-30 µm auf. Die Temperatur während des Walzprozesses war 22°C. Das erhaltene Flächengebilde hatte eine Dicke von 1,1 mm und war mechanisch sehr instabil. Das Flächengebilde konnte nicht zerstörungsfrei auf einen mechanischen Träger, ein Nickel-Netz mit einer Nickeldrahtdicke von 0,14 mm und einer Maschenweite von 0,5 mm, aufgebracht werden. Die Herstellung einer Gasdiffusionselektrode war somit nicht möglich.

### Beispiel 2 (Vergleichsbeispiel)

Eine Mischung aus Silber(I)oxid und PTFE im Gew.-Verhältnis 9:1 wurde mittels einer schnell laufenden Schlagmühle, Fa. IKA, Typ M20, in Intervallen von jeweils 15 Sekunden unter Kühlung aufgemahlen. Diese Mischung wurde auf einer Walze der Fa. Wetzel, mit 2 Walzenkörpern der Breite 40 cm und des Durchmessers 13 cm bei einem Walzenspaltabstand von 0,18 mm auf einer Breite von 20 cm mit einer Zuhaltekraft von 18 kN/cm verwalzt. Die Umfangsgeschwindigkeit betrug 1,35 m/min, die Rauhigkeit der Walzenoberflächen wies eine Ra-Zahl von 25-30 µm auf. Die Temperatur während des Walzprozesses war 22°C. Das erhaltene Flächengebilde hatte eine Dicke von 0,19 mm und war mechanisch stabil. Das Flächengebilde konnte problemlos auf einen mechanischen Träger, ein Nickel-Netz, mit einer Drahtdicke von 0,14 mm und einer Maschenweite von 0,5 mm aufgebracht werden. Die Spannung der Elektrolysezelle betrug bei einer Stromdichte von 4 kA/m² 2,45 V. Für technische Anwendungen ist diese Spannung deutlich zu hoch.

### Beispiel 3

Eine Mischung aus Silber(I)oxid und PTFE im Gew.-Verhältnis 9:1 wurde mittels einer schnell laufenden Schlagmühle, Fa. IKA, Typ M20, in Intervallen von jeweils 15 Sekunden unter Kühlung aufgemahlen. Diese Mischung wurde auf einer Walze der Fa. Wetzel, mit 2 Walzenkörpern der Breite 20 cm und des Durchmessers 10,8 cm bei einem Walzenspaltabstand von 0,13 mm auf einer Breite von 20 cm mit einer Zuhaltekraft von 1,0 kN/cm verwalzt. Die Umfangsgeschwindigkeit betrug 1,35 m/min, die Rauhigkeit der Walzenoberflächen wies eine Ra-Zahl von 25-30 µm auf. Die Temperatur während des Walzprozesses war 22°C. Das erhaltene Flächengebilde hatte eine Dicke von 0,35 mm und war mechanisch stabil. Das Flächengebilde konnte problemlos auf einen mechanischen Träger, ein Nickel-Netz, mit einer Drahtdicke von 0,14 mm und einer Maschenweite von 0,5 mm aufgebracht werden. Die Spannung der Elektrolysezelle betrug bei einer Stromdichte von 4 kA/m² 2,35 V.

### Beispiel 4

Eine Mischung aus Silber(I)oxid und PTFE im Gew.-Verhältnis 9:1 wurde mittels einer schnell laufenden Schlagmühle, Fa. IKA, Typ M20, in Intervallen von jeweils 15 Sekunden unter Kühlung aufgemahlen. Diese Mischung wurde auf einer Walze, die selbst konstruiert war, mit 2 Walzenkörpern der Breite 40 cm und des Durchmessers 10,8 cm bei einem Walzenspaltabstand von 0 mm auf einer Breite von 15 cm mit einer Zuhaltekraft von 0,5 kN/cm verwalzt. Die Umfangsgeschwindigkeit betrug 1,35 m/min, die Rauhigkeit der Walzenoberflächen wies eine Ra-Zahl von 25-30 µm auf. Die Temperatur während des Walzprozesses war 22°C. Das erhaltene Flächengebilde hatte eine Dicke von 0,35 mm und war mechanisch stabil. Das Flächengebilde konnte problemlos auf einen mechanischen Träger, ein Nickel-Netz, mit einer Drahtdicke von 0,14 mm und einer Maschenweite von 0,5 mm aufgebracht werden. Die Spannung der Elektrolysezelle betrug bei einer Stromdichte von 4 kA/m² 2,15 V.

### Beispiel 5

Eine Mischung aus Silber(I)oxid und PTFE im Gew.-Verhältnis 9:1 wurde mittels einer schnell laufenden Schlagmühle, Fa. IKA, Typ M20, in Intervallen von jeweils 15 Sekunden unter Kühlung aufgemahlen. Diese Mischung wurde auf einer Walze der Fa. Wetzel, mit 2 Walzenkörpern der Breite 40 cm und des Durchmessers 10,8 cm bei einem Walzenspaltabstand von 0 mm und einer Zuhaltekraft von 0,5 kN/cm auf einer Breite von 30 cm verwalzt. Die Umfangsgeschwindigkeit betrug 1,35 m/min, die Rauhigkeit der Walzenoberflächen wies eine Ra-Zahl von 25-30 µm auf. Die Temperatur während des Walzprozesses war 22°C. Das erhaltene Flächengebilde hatte eine Dicke von 0,42 mm und war mechanisch stabil. Das Flächengebilde wurde auf dem genannten Walzenstuhl auf ein Nickel-Netz mit einer Maschenweite von 0,5 mm und einer Drahtdicke von 0,14 mm so aufgewalzt, dass die dabei auftretende Linienkraft 1 kN/cm betrug. Die Umfangsgeschwindigkeit betrug 1,3 m/min. Die Spannung der Elektrolysezelle betrug bei einer Stromdichte von 4 kA/m² 2,28V.

## Patentansprüche

1. Verfahren zur Herstellung von Gasdiffusionselektroden, insbesondere für den Einsatz in Elektrolysezellen, bei welchem zunächst ein Flächengebilde mittels eines Walzenpaares durch Walzen einer Pulvermischung, enthaltend wenigstens einen Katalysator oder eine Katalysatormischung und einen Binder, hergestellt wird und anschließend das Flächengebilde mit einem elektrisch leitenden Katalysatorträger durch Walzen mittels eines Walzenpaares verbunden wird, **dadurch gekennzeichnet, dass** die Zuhaltekraft der Walzen beim Walzen der Pulvermischung im Bereich von 0,2 kN/cm bis 15 kN/cm konstant gehalten wird, und dass das durch Walzen hergestellte Flächengebilde ebenfalls durch Walzen mit dem elektrisch leitenden Träger verbunden wird, wobei das Walzen unter einer Linienkraft von 0,1 kN/cm bis 2 kN/cm erfolgt.

2. Verfahren zur Herstellung von Gasdiffusionselektroden, insbesondere für den Einsatz in Elektrolysezellen, bei welchem zunächst ein Flächengebilde mittels eines Walzenpaares durch Walzen einer Pulvermischung, enthaltend wenigstens einen Katalysator oder eine Katalysatormischung und einen Binder, hergestellt wird und anschließend das Flächengebilde mit einem elektrisch leitenden Katalysatorträger durch Walzen mittels eines Walzenpaares verbunden wird, nach Anspruch 1, **dadurch gekennzeichnet, dass** der Durchmesser der Walzen unabhängig voneinander minimal 8 cm und maximal 15 cm beträgt.

3. Verfahren nach einem der Ansprüche 1 - 2, **dadurch gekennzeichnet, dass** die Zuhaltekraft der Walzen beim Walzen der Pulvermischung im Bereich von 0,2 kN/cm bis 10 kN/cm, vorzugsweise 0,2 kN/cm bis 5 kN/cm, besonders bevorzugt 0,2 kN/cm bis 2 kN/cm beträgt.

4. Verfahren nach einem der Ansprüche 1 - 3, **dadurch gekennzeichnet dass** der Durchmesser der Walzen unabhängig voneinander minimal 8 cm und maximal 13 cm, insbesondere maximal 11 cm, beträgt.

5. Verfahren nach einem der Ansprüche 1 - 4, **dadurch gekennzeichnet, dass** die Umfangsgeschwindigkeit der Walzen beim Walzen der Pulvermischung unabhängig voneinander von 0,05 m/min bis 19 m/min, vorzugsweise 0,1 m/min bis 15 m/min beträgt.

6. Verfahren nach einem der Ansprüche 1 - 5, **dadurch gekennzeichnet, dass** die Umfangsgeschwindigkeit der Walzen beim Verbinden des Flächengebildes mit dem Träger unabhängig voneinander von 0,1 m/min bis 12 m/min, vorzugsweise von 0,8 m/min bis 2 m/min, beträgt.

7. Verfahren nach einem der Ansprüche 1 - 6, **dadurch gekennzeichnet, dass** das Flächengebilde eine Dicke von 0,05 mm bis 0,7 mm, vorzugsweise 0,15 mm bis 0,6 mm, aufweist.

8. Verfahren nach einem der Ansprüche 1 - 7, **dadurch gekennzeichnet, dass** die Temperatur des Flächengebildes und/oder des Katalysatorträgers während der Walzprozesse 5°C bis 70°C beträgt.

9. Verfahren nach einem der Ansprüche 1 - 8, **dadurch gekennzeichnet, dass** die Walzen unabhängig voneinander eine Oberflächenrauhigkeit von 0,05 µm bis 1,5 µm aufweisen.

10. Verfahren nach einem der Ansprüche 1 - 9, **dadurch gekennzeichnet, dass** der elektrisch leitfähige Katalysatorträger mit einer gasdurchlässigen, metallischen Grundplatte verbunden ist.

## Claims

1. Method for producing gas diffusion electrodes, in particular for use in electrolysis cells, in which first a sheet-like structure is produced by means of a pair of rolls by rolling a powder mixture containing at least one catalyst or a catalyst mixture and a binder and then the sheet-like structure is connected to an electrically conductive catalyst support by rolling by means of a pair of rolls, **characterized in that** the clamping force of the rolls during rolling of the powder mixture is kept constant in the range from 0.2 kN/cm to 15 kN/cm, and **in that** the sheet-like structure produced by rolling is likewise connected by rolling to the electrically conductive support, wherein the rolling is effected under a nip force of from 0.1 kN/cm to 2 kN/cm.

2. Method for producing gas diffusion electrodes, in particular for use in electrolysis cells, in which first a sheet-like structure is produced by means of a pair of rolls by rolling a powder mixture containing at least one catalyst or a catalyst mixture and a binder and then the sheet-like structure is connected to an electrically conductive catalyst support by rolling by means of a pair of rolls, according to Claim 1, **characterized in that** the diameter of the rolls, independently of one another, is not less than 8 cm and not more than 15 cm.

3. Method according to either of Claims 1 - 2, **characterized in that** the clamping force of the rolls during rolling of the powder mixture is in the range from 0.2 kN/cm to 10 kN/cm, preferably from 0.2 kN/cm to 5 kN/cm, particularly preferably from 0.2 kN/cm to 2 kN/cm.

4. Method according to any of Claims 1 - 3, **characterized in that** the diameter of the rolls, independently of one another, is not less than 8 cm and not more than 13 cm, in particular not more than 11 cm.

5. Method according to any of Claims 1 - 4, **characterized in that** the circumferential speed of the rolls during rolling of the powder mixture, independently of one another, is from 0.05 m/min to 19 m/min, preferably from 0.1 m/min to 15 m/min.

6. Method according to any of Claims 1 - 5, **characterized in that** the circumferential speed of the rolls during connection of the sheet-like structure to the support, independently of one another, is from 0.1 m/min to 12 m/min, preferably from 0.8 m/min to 2 m/min.

7. Method according to any of Claims 1 - 6, **characterized in that** the sheet-like structure has a thickness of from 0.05 mm to 0.7 mm, preferably from 0.15 mm to 0.6 mm.

8. Method according to any of Claims 1 - 7, **characterized in that** the temperature of the sheet-like structure and/or of the catalyst support during the rolling processes is from 5°C to 70°C.

9. Method according to any of Claims 1 - 8, **characterized in that** the rolls, independently of one another, have a surface roughness of from 0.05 µm to 1.5 µm.

10. Method according to any of Claims 1 - 9, **characterized in that** the electrically conductive catalyst support is connected to a gas-permeable, metallic baseplate.

## Revendications

1. Procédé pour produire des électrodes à diffusion gazeuse, en particulier en vue de l'utilisation dans des cellules d'électrolyse, dans lequel on fabrique d'abord un article plat au moyen d'une paire de cylindres par laminage d'un mélange de poudres, contenant au moins un catalyseur ou un mélange de catalyseurs et un liant, et on assemble ensuite l'article plat à un support de catalyseur électriquement conducteur par laminage au moyen d'une paire de cylindres, **caractérisé en ce que** l'on maintient constante la force de verrouillage des cylindres lors du laminage du mélange de poudres dans la plage de 0,2 kN/cm à 15 kN/cm, et **en ce que** l'on assemble l'article plat fabriqué par laminage également par laminage au support électriquement conducteur, dans lequel on effectue le laminage sous une force linéique de 0,1 kN/cm à 2 kN/cm.

2. Procédé pour produire des électrodes à diffusion gazeuse, en particulier en vue de l'utilisation dans des cellules d'électrolyse, dans lequel on fabrique d'abord un article plat au moyen d'une paire de cylindres par laminage d'un mélange de poudres, contenant au moins un catalyseur ou un mélange de catalyseurs et un liant, et on assemble ensuite l'article plat à un support de catalyseur électriquement conducteur par laminage au moyen d'une paire de cylindres, selon la revendication 1, **caractérisé en ce que** le diamètre des cylindres vaut, indépendamment l'un de l'autre, au minimum 8 cm et au maximum 15 cm.

3. Procédé selon une des revendications 1 ou 2, **caractérisé en ce que** la force de verrouillage des cylindres lors du laminage du mélange de poudres vaut de 0,2 kN/cm à 10 kN/cm, de préférence de 0,2 kN/cm à 5 kN/cm, et de préférence encore de 0,2 kN/cm à 2 kN/cm.

4. Procédé selon l'une quelconque des revendications 1 à 3, **caractérisé en ce que** le diamètre des cylindres vaut, indépendamment l'un de l'autre, au minimum 8 cm et au maximum 13 cm, en particulier au maximum 11 cm.

5. Procédé selon l'une quelconque des revendications 1 à 4, **caractérisé en ce que** la vitesse périphérique des cylindres lors du laminage du mélange de poudres vaut, indépendamment l'un de l'autre, de 0,05 m/min à 19 m/min, de préférence de 0,1 m/min à 15 m/min.

6. Procédé selon l'une quelconque des revendications 1 à 5, **caractérisé en ce que** la vitesse périphérique des cylindres lors de l'assemblage de l'article plat avec le support vaut, indépendamment l'un de l'autre, de 0,1 m/min à 12 m/min, de préférence de 0,8 m/min à 2 m/min.

7. Procédé selon l'une quelconque des revendications 1 à 6, **caractérisé en ce que** l'article plat présente une épaisseur de 0,05 mm à 0,7 mm, de préférence de 0,15 mm à 0,6 mm.

8. Procédé selon l'une quelconque des revendications 1 à 7, **caractérisé en ce que** la température de l'article plat et/ou du support de catalyseur pendant les processus de laminage vaut 5°C à 70°C.

9. Procédé selon l'une quelconque des revendications 1 à 8, **caractérisé en ce que** les cylindres présentent, indépendamment l'un de l'autre, une rugosité superficielle de 0,05 µm à 1,5 µm.

10. Procédé selon l'une quelconque des revendications 1 à 9, **caractérisé en ce que** le support de catalyseur électriquement conducteur est assemblé à une plaque de base métallique perméable au gaz.
